# EUROPEAN PATENT SPECIFICATION

(11) **EP 3 445 560 B1**
(45) Date of publication and mention of the grant of the patent: **30.11.2022**
(21) Application number: 17727723.3
(22) Date of filing: 19.04.2017
(51) Int. Cl.: B29C 63/18, B65C 3/06, B65B 9/14, B29C 63/42, B29L 31/00

(54) **CONTAINER SLEEVING DEVICE, SYSTEM AND METHOD**
BEHÄLTERHÜLSENVORRICHTUNG, -SYSTEM UND -VERFAHREN
DISPOSITIF, SYSTÈME ET PROCÉDÉ DE GAINAGE DE CONTENEURS

(30) Priority: 19.04.2016 NL 2016634; 11.05.2016 NL 2016758; 06.01.2017 NL 2018140
(43) Date of publication of application: 27.02.2019
(73) Proprietor: Fuji Seal International, Inc., Osaka-shi, Osaka 532-0003 (JP)
(72) Inventor: VAN HECK, Marinus Antonius Leonarda, 5254 LB Haarsteeg (NL); HEEMAN, Frederik Gerardus, 5911 AM Venlo (NL); GEBBINK, Jeroen Gerrit Anton, 5708 ZK Helmond (NL)
(74) Representative: Hylarides, Paul Jacques
(86) International application number: PCT/NL2017/050249
(87) International publication number: WO 2017/183973

(56) References cited:
- EP-A1- 2 104 604
- EP-A1- 2 300 216
- US-A- 4 016 704

## Description

The present disclosure relates to a container sleeving method, container sleeving device and container sleeving system for arranging sleeves around a plurality of containers.

Such system, device and method are disclosed in, for example, the international publication WO 2011031160 A in the name of the same applicant. The sleeving system is aimed at arranging sleeves (labels) around containers, for instance food containers, bottles, bowls, holders, etc. in a fast and reliable manner by feeding a continuous strip of flattened tubular foil material wound around a foil supply reel towards a spreading element, transporting the foil material along the outer surface of the spreading element by a foil drive mechanism so as to open the foil material, cutting the foil material to form sleeves and discharging the sleeves from the spreading element towards a container passing by the spreading element while being transported on a conveyor. The sleeve is applied around the container and the container with the sleeve is transported to an oven in order to heat shrink the sleeve around the container.

A disadvantage of the known systems may be that they are less suitable for handling foil material that is relatively thin and/or relatively flexible or soft, at least if a high handling rate and a high sleeving reliability is required. For instance, when the thickness of the foil material is reduced to 20 µm or less, the sleeve sometimes has the tendency to jam on the spreading element, especially at the distal (discharge) end thereof. This is an undesirable situation.

Document EP 2300 216 A0, referring to WO 2009/145613 A1, discloses a device for arranging sleeves around an object. The device comprises a spreading element for spreading open a strip of flattened tubular foil material moving along the outer surface of the spreading element. The device also comprises spray nozzles for actively spraying a medium under pressure in a direction parallel to the discharge direction so as to drive the movement of sleeves along the outer surface of the spreading element. The document therefore discloses alternative means of actively forcing the sleeve to travel along the spreading element, wherein a medium under pressure is actively used. However, the alternative means are complex, require an external pressurized medium to be used and/or still involve a risk that the sleeve gets jammed on the spreading element.

It is an object of the present invention to provide a container sleeving device, container sleeving system and container sleeving method for arranging sleeves around a plurality of containers wherein the above-mentioned drawbacks are removed or at least reduced.

It is a further object of the present invention to provide such container sleeving device, container sleeving system and container sleeving method wherein very thin sleeves (for instance, sleeves with a thickness of typically 20 µm or less) may be arranged on containers in a fast and reliable manner.

According to a first aspect at least one of the objects is achieved in a container sleeving device as claimed in attached claim 1.

For instance, the inventors found to their surprise that the likelihood of a sleeve getting jammed on the distal portion of a spreading element may be reduced by providing the distal spreading element portion with one or more pressure regulating openings that are able to regulate the (local) pressure close to the outer surface of the distal spreading element portion. The openings enable the regulation of the pressure in the gap between the outer surface of the distal spreading element portion and the inner surface (i.e. the surface facing the distal spreading element portion) of a sleeving moving over the distal spreading element portion. Due to this pressure regulation the sleeve has a smaller tendency to be sucked towards the outer surface of the spreading element. This sucking effect may be caused by the (high velocity) movement of the sleeve along the (stationary) spreading element outer surface. The velocity difference between the sleeve and the spreading element in combination with the high flexibility of a very thin sleeve may cause the pressure on the inner side of the sleeve inside said gap to be lower than the pressure on the outside of the sleeve (Bernoulli-effect). On the outside of the sleeve an ambient pressure prevails (Bernoulli-effect). The resulting pressure difference would cause the sleeve to "adhere" to the outer surface of the spreading element or at least to move non uniformly over the spreading element towards the container. The pressure regulating openings may be configured to reduce this pressure difference so that the tendency of the sleeve to get jammed on the spreading element is reduced as well.

Air derived from a different position (for instance derived from an inlet at the bottom of the spreading element) may be supplied to the gap or space between a moving sleeve and the spreading element so that the pressure is locally increased. The openings may be radial openings extending in radial directions, so that air may be radially introduced into the gap as the sleeve advances past the openings. In embodiments of the present disclosure the openings debouche in one or more channels and/or cavities inside the spreading element which channels/cavities are in open (fluid) connection with the ambient air. Air may flow through the cavities and/or channels towards the openings and then into the gap between the circumferential outer surface of the distal spreading portion and the inner side of a sleeve moved along the distal spreading portion.

In a further embodiment the cavity may comprise one or more channels in open connection with the ambient air outside the container sleeving device and with the openings in the distal spreading element portion and/or the proximal spreading element portion. The central channel is configured to provide an open connection between the layer of air in the gap between the moving sleeve and the circumferential outer surface of the distal spreading element portion so that the low pressure as a result of the moving at high speed along the distal spreading element portion, is at least partially compensated.

In an embodiment the distal spreading element portion may comprise a cylindrical wall and/or the openings may be through-holes. Each of the through-holes then may debouch in the central cylinder cavity while the central cylinder cavity is in open connection with the ambient air.

The number of openings may vary depending on the requirements, for instance 20 or more. Preferably the openings are uniformly distributed over the circumferential outer surface of the distal spreading element portion so that the risk of the sleeve getting jammed locally or its movement at least partially hampered is reduced.

In case the pressure regulating openings are arranged in the proximal spreading element portion and when the proximal spreading element portion comprises a substantially diverging part, the at least one of the openings may be arranged in the substantially diverging part.

According to another aspect a container sleeving system for arranging sleeves on a plurality of containers as claimed in attached claim 12 is provided. The container sleeving system comprises at least one container sleeving device as defined herein and at least one of a stationary frame configured to suspend the at least one container sleeving device, a conveyor for transporting the containers. The conveyor may be configured to transport the containers consecutively along a shooting position at a distance from the sleeve discharge unit. The system may also comprise a sleeve supply configured to advance a sheath of foil material to at least a spreading element of the at least one container sleeving device.

According to another aspect a method of arranging sleeves on a plurality of containers as claimed in attached claim 13 is provided.

The cutting of the tubular foil material can be performed before advancing the tubular foil material over the spreading element and before spreading open the tubular foil material. In other embodiments the foil material is advanced (to some extent) over the spreading element so as to spread open the foil material and then the cutting is performed on the spread-open tubular foil material.

The method may further comprise reducing the difference between the ambient air pressure and the air pressure in the gap between the sleeve and the outer surface of the distal spreading element portion. Moving the sleeve over the outer surface of the distal spreading element portion involves moving the sleeve over a plurality of openings configured to reduce said pressure difference, as described above. The method may further involve guiding ambient air into at least a channel inside the distal spreading unit portion and from the at least a channel through at least one opening radially outwards.

Further characteristics of the present invention will be elucidated in the accompanying description of various exemplary embodiments thereof, examples of which are illustrated in the accompanying drawings wherein like reference numerals refer to the like elements throughout. The figures show:
Figure 1 a schematic overview of a container sleeving system according to an embodiment of the present invention;
Figure 2 a schematic side view of an embodiment of a spreading element of a sleeving device, the spreading element having a distal spreading element portion according to an embodiment provided with pressure regulating openings;
Figure 3 a schematic side view in perspective of the embodiment of the distal spreading element portion of figure 2;
Figure 4 a schematic side view in perspective of the distal spreading element portion of the spreading element of figure 2, when a sleeve is moving downward over the circumferential outer surface of the distal spreading element portion;
Figure 5 a partly taken-away view in perspective of a further embodiment of a part of the spreading element of a sleeving device, the spreading element having a proximal spreading element portion and an intermediate spreading element portion provided with pressure regulating openings;
Figure 6 a side view of the further embodiment of the spreading element of figure 5;
Figure 7A a longitudinal section along A-A of the further embodiment of figures 5 and 6;
Figure 7B a cross-section of the further embodiment of figures 5 and 6;
Figure 8 a cross-section along B-B of the further embodiment of figures 5-7;
Figure 9 a cross-section along C-C of the further embodiment of figures 5-8; and
Figure 10 a cross-section along D-D of the further embodiment of figures 5-9.

Unless defined otherwise, all technical terms used herein have the same meaning as commonly understood by one of ordinary skill in the art to which this invention belongs. Still, certain elements are defined below for the sake of clarity and ease of reference. Furthermore it is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the attached claims. Any recited method can be carried out in the order of events recited or in any other order which is logically possible.

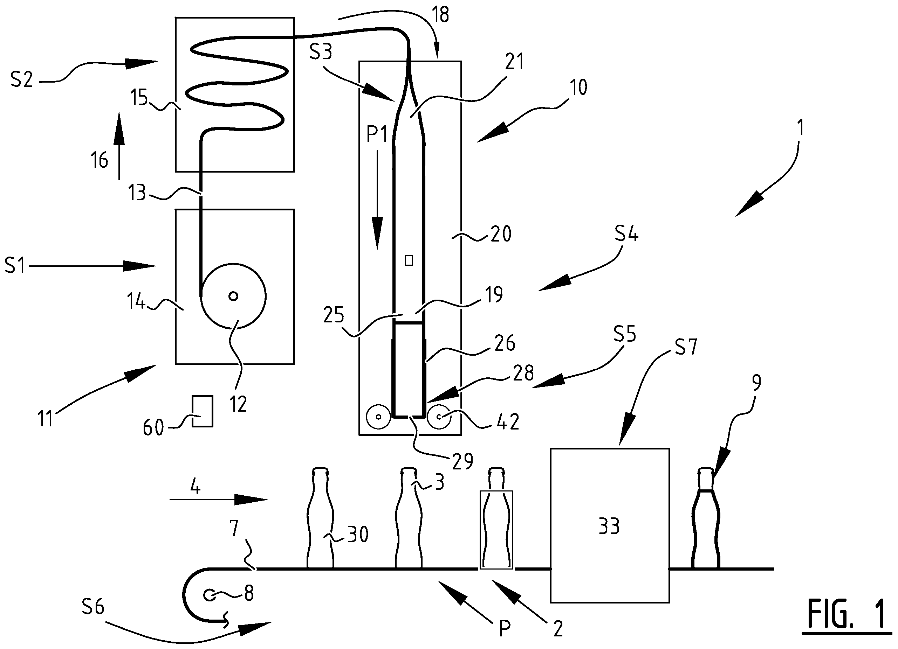

Figure 1 schematically shows an embodiment of a sleeving system 1 for sleeving (labeling) containers. The sleeving system 1 comprises a conveyor 2 (only partly shown in the figure) for conveying one or more parallel rows of containers 30, for instance food containers, bottles and the like, in a direction 4 along a sleeving position (P) at which sleeves are arranged around the containers. Embodiments of the conveyor may comprise an endless transport belt 7 to be conveyed by suitable wheels 8 in the direction 4. However, other types of conveyors may be employed as well. In fact, conveyor 2 may be any type of conveyor capable of transporting an array of containers along the sleeving position.

In the embodiment shown in figure 1 the containers 30 are arranged on top of the belt 7. The conveyor 2 may be configured to transport the containers 30 in a discontinuous manner (i.e. intermittently). In preferred embodiments, however, the conveyor is arranged to transport the containers in a continuous manner (i.e. non-intermittently). In these embodiments the operation of arranging of sleeves around the container is performed on the fly and essentially without interrupting the transport of the containers.

Figure 1 also shows a stationary sleeving device 10 arranged above the sleeving position (P) and configured to arrange sleeves of foil material around containers transported by the conveyor 2. Sleeves are formed by cutting a continuous strip of foil material configured as a flattened tube or envelope at a suitable length. In the present application "sleeve" may be used as an indication for the individual pieces of foil that are arranged around products, but may equally well refer to the foil or strip forming a flattened or opened tube before it is cut.

Preferably the foil material is of a type that shrinks when it is subjected to a predefined physical phenomenon, for instance when it is subjected to heat. As explained later, the heat shrinkable foil may be applied around the container and then attached by heat-shrinking the foil onto the container.

Figure 1 further shows a sleeve supply 11 for supplying a continuous strip of sleeve-like foil material 13 to the sleeving device 10. The sleeve supply 11 comprises a foil stock 14 in which one or more of supply reels 12 are arranged. On each of the supply reels 12 a continuous strip of sleeve-like foil material 13 has been wound. The strip of foil material can be transported towards the sleeving device 10 (direction 16) by any suitable means, for instance several sets of wheels or rollers (not specifically shown in the figures). The foil material of a selected one of the supply reels 12 is transported (S1) towards a foil buffer 15. The foil buffer is arranged to buffer (S2) the supplied foil material to allow for variations in operating speed of the supply without the need to interrupt the sleeving process. In an embodiment the foil stock 14 comprises a splicer (not shown) which is configured to connect a new strip of foil material from a further roll to the end of strip of foil material of an old reel to allow for a continuous feed of foil material to the sleeving device 10. Due to the splicer and the foil buffer 15 the supply of foil material to the sleeving device 10 can be essentially continuously (i.e. in an uninterrupted manner).

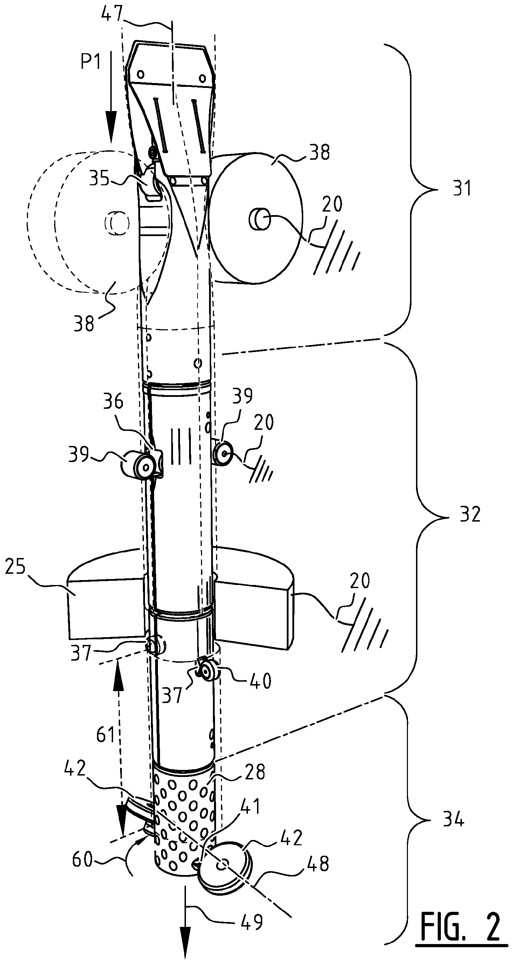

The supplied foil material 13, which has a flattened tubular shape, is caused to move (direction 18) along a spreading element 19, herein also referred to as the "mandrel" of the sleeving device 10. In the embodiment shown in figures 1 and 2 the spreading element 19 is configured to first spread (S3) the flattened foil material to an "open" position and then to cut the foil material to a specific length so that foil material forms consecutive sleeves. In other embodiments the flattened foil material is first cut to a specific length to provide a sleeve and then advanced along the spreading element to open the sleeve. In each case a sleeve is sized to be arranged around the container 30 passing below the spreading unit 19. Securing the sleeve to the container may involve gluing or, preferably, a heat shrinking process.

As described above the sleeving device 10 comprises a spreading element 19 (which may be comprised of a plurality of parts). The spreading element 19 is suspended from a stationary frame 20 and is configured for spreading the strip of foil (which initially has a flattened tubular form) to an open position. To this end the spreading element 19 is provided with a spear or tip 21 shaped to open the foil 13 delivered as a flat envelop of foil material. For instance, the spear 21 may have a substantially flat cross section at the upstream end and more or less circular cross section at the downstream end thereof to bring the foil material to the desired tubular envelope or sleeve shape.

Sleeving device 10 further comprises a cutting unit 25 for cutting (S4) of sleeves from the opened foil material 13. The foil material may be guided past the cutting means unit for cutting the foil material at certain intervals so as to obtain individual sleeve-like foil envelopes or sleeves 26 of a suitable length. More specifically, the tubular foil material may be advanced over the spreading element and then stopped at a predetermined position such that the cutting device 25 may cut the foil material to realize a sleeve 26 having the required cutting length 61.

The sleeving device 10 also comprises a sleeve discharge unit 28, for instance comprising a pair of opposing inner guide wheels mounted at the distal end 29 of the spreading element 19 and a pair of outer drive wheels (which may be driven by a suitable electric motor, not shown in the figures) mounted at the frame 20, for shooting (S5) sleeves 26 cut from the strip of foil material towards the containers passing by the sleeving device. If the timing of discharging is correct and the containers are more or less aligned with the spreading element 19 the sleeves may be correctly arranged around the containers.

Once a sleeve 26 has been formed by the cutting unit 25, ejected (S5) towards the container 30 by the sleeve discharge unit 28 and arranged around the container by having the sleeve slide downwardly along the top end 3 of the container 30, the combination of sleeve 26 and container 30 is conveyed (S6) further in direction 4 by conveyor 2. Conveyor 2 transports the sleeved containers further downstream to a shrink unit 33 for attaching the sleeves around the containers by shrinking the same. For instance, the shrink unit 33 may be a heated steam oven wherein the sleeve 26 may be heat shrunk (S7) so that the sleeve 26 is permanently attached to the container 30, providing a labeled container 9. In a subsequent step a drying process may be applied.

Figure 1 also shows a controller 60 that is configured to control the sleeving by the sleeving device 10, the transport by the conveyor 2 and the shrink-operation in the shrink unit 33.

Advantages of a system set up according to figure 1 are high speed, accuracy, reliability and reduced gap. Not only sleeves are provided at high speed using the sleeve discharge unit, but also the heat shrinking in the oven is executed quickly, limiting the actual heating of the container that could already contain the product such as a dairy product.

Figure 2 shows the sleeving device 10, especially the spreading element 19 or mandrel, in more detail. As mentioned above, the spreading element 19 is shaped so at to open the flattened foil material into a tubular envelope form. The proximal spreading element portion of the spreading element 19 (upper part 31 of the spreading element) has an essentially flat shape in cross-section, while for the intermediate spreading element portion 32 and the distal spreading element portion 34 the shape in cross-section is generally circular or oval. The spreading element 19 is suspended from the frame by a number of inner guide wheels in combination with a number of outer drive wheels mounted to the frame 20. In the specific arrangement of figure 2 the inner guide wheels of the sleeving device 10 comprise a set of upper guide wheels 35, a set of intermediate guide wheels 36 and a set of lower guide wheels 37, while the outer drive wheels comprise a set of upper drive wheels 38, intermediate drive wheels 39 and lower drive wheels 40. At least one of the drive wheels may be driven by drive motor (not shown), for instance a drive motor attached to the frame 20. Close to the distal end 29 of the spreading element 19 a set of inner discharge wheels 41 and a set of outer discharge wheels 42 are provided. The outer discharge wheels 42 are driven by one or more suitable drive motors (not shown) in order to accelerate the sleeve 26 positioned at the sleeve shot or distal spreading element portion 34 and throw the opened sleeve 26 towards a container 30 on the conveyor 2.

As shown in figure 2, the outer discharge wheels 42 and associated inner discharge wheels 41 may be oriented obliquely with respect to the axial direction 47 of the spreading element 19. For instance, the axis of rotation 48 of an outer discharge wheel 42 (and a corresponding axis of rotation of an inner discharge wheel 41) may be about 50° with respect to the axial direction 47, in order for the sleeve discharge unit 28 to engage the sleeve 26 and provide a linear motion (direction 49) combined with a rotational motion (direction 60) to the sleeve 26 when it is discharged towards a container. In other embodiments the outer drive wheels 42 are aligned with the axial direction 47 of the spreading element 19 (i.e. the axis of rotation 48 is perpendicular to the axial direction 47) so that no sleeve is only given a linear motion (downwards in case of downsleeving (direction P₁, figure 2) or upwards in case of upsleeving).

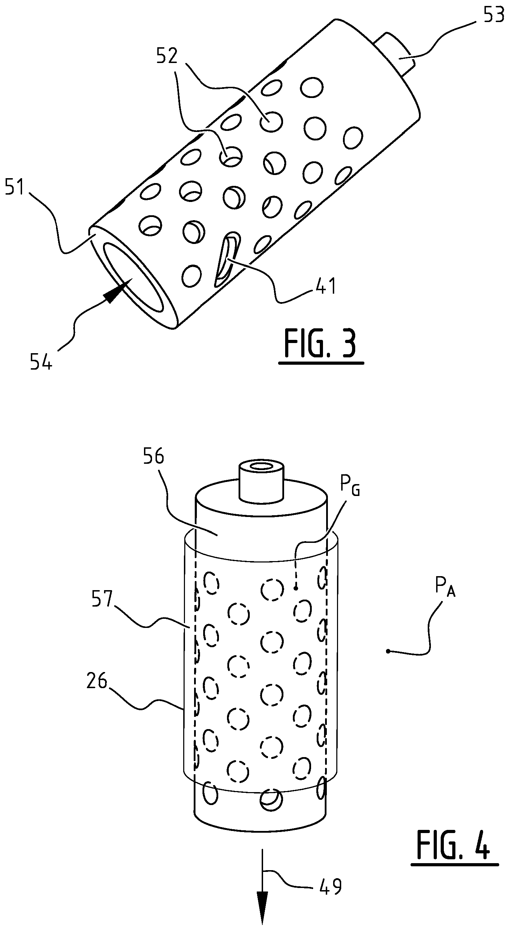

As shown in figure 2 and, in more detail, in figure 3, the distal spreading element portion 34 may comprise a cylindrical wall 51 in which a number of openings 52 have been provided. In the embodiment shown the openings 52 are radial through-openings in open connection with the cylindrical volume or cavity 53 positioned in the center of the distal spreading element portion 34 and being in open connection wit the ambient air, for instance via the inlet at the bottom side of the cylinder. At the top portion of the distal spreading element portion 34 an axial attachment rod 53 is provided which can be slid into a corresponding receptacle (not shown) in the bottom to the intermediate portion 32 of the spreading element 19 in order to firmly attach the distal spreading element portion 34 to the remainder of the spreading element 19. Generally the distal spreading element portion 34 is shaped to provide a smooth transition between the intermediate portion 32 of the spreading element 19 and the distal spreading element portion 34, so that a sleeve travelling along the outer circumferential surface of the spreading element 19 is essentially not hampered in its movement.

Referring to figure 4, a possible explanation of the physical effects occurring during the movement of the sleeve along the distal spreading element portion 34 and the influence of the pressure regulating openings provided in the spreading element is given. As a sleeve 26 is travelling along the outer surface 56 of the cylindrical wall 51 of the distal spreading element portion 34 a boundary layer or gap 57 between the inner side of the sleeve 26 and the outer surface 56 of the spreading element exist. The air in this gap 57 appears to be entrained by the movement of the sleeve 26. This entrainment would result in air in the gap starting to move with a certain speed (velocity). This increase of the air velocity in the gap 57 (resulting in an increase of the dynamic pressure inside the gap, the increase being dependent on the velocity of the air) causes simultaneously a reduction of the static pressure P_{G} in the gap 57 (according to Bernoulli's principle). The air surrounding the sleeve at the outer side is still at the ambient (air) pressure P_{A}. Consequently, the movement of the sleeve 26 causes a difference between the static pressure P_{G} in the gap between the sleeve and the spreading element and the (static) ambient pressure P_{A}. Due to the difference in the ambient pressure P_{A} and the static pressure P_{G} in the boundary layer or gap 57 that would prevail when no openings 52 would have been available, a radially inward directed force caused by the Bernoulli effect may be exerted on the sleeve 26. This radial force may cause the sleeve 26, especially in case of ultra thin sleeves, for instance sleeves with a thickness of 20 µm or less, to get jammed on the distal spreading element portion 34. In order to avoid the sleeve to become jammed as it travels at high speed along the outer surface 56 of the distal spreading element portion 34, the openings 52 that are in connection with the internal volume 53 wherein the ambient pressure P_{A} prevails, provide a flow of air in order to at least partly equalize the pressure difference between the pressure (P_{A}) outside the layer 57 and the pressure (P_{G}) inside the layer. In this manner the likelihood of the movement of the sleeve 26 to be impeded while it travels along the distal spreading element portion 34 or the sleeve to become jammed on the distal spreading element portion 34 may be reduced.

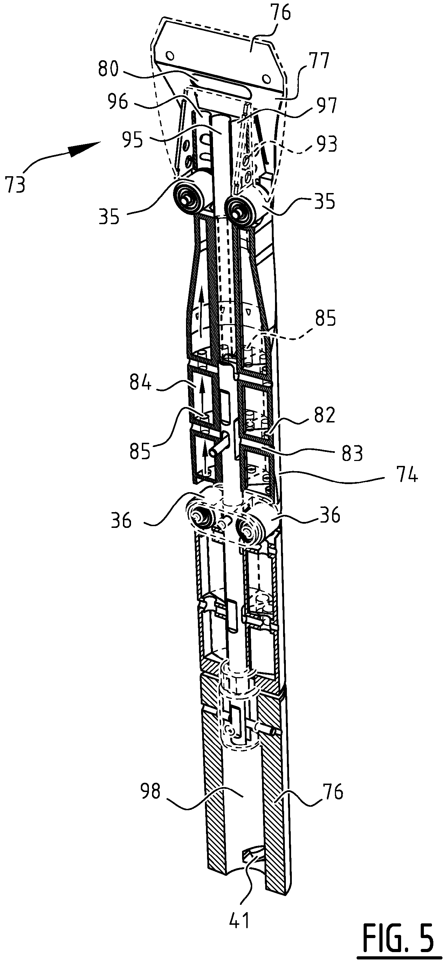

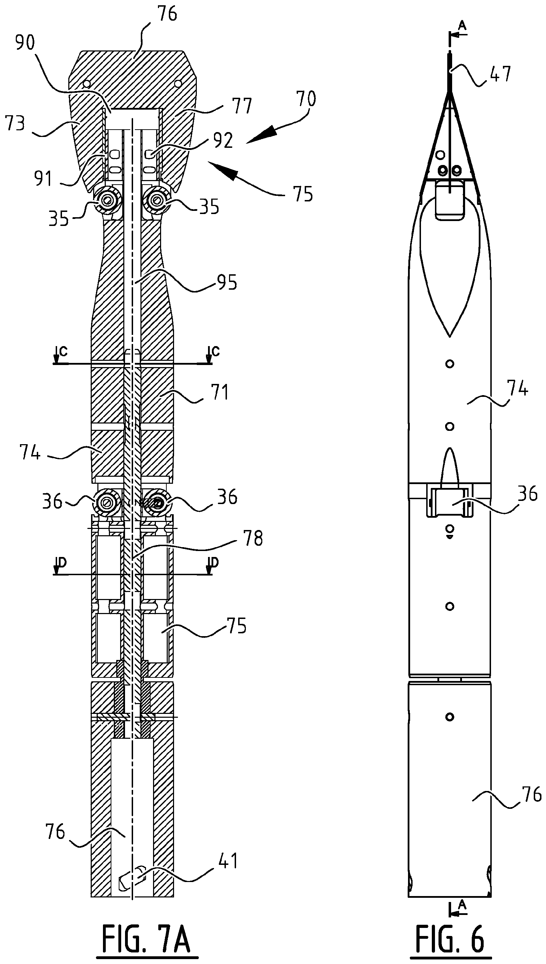

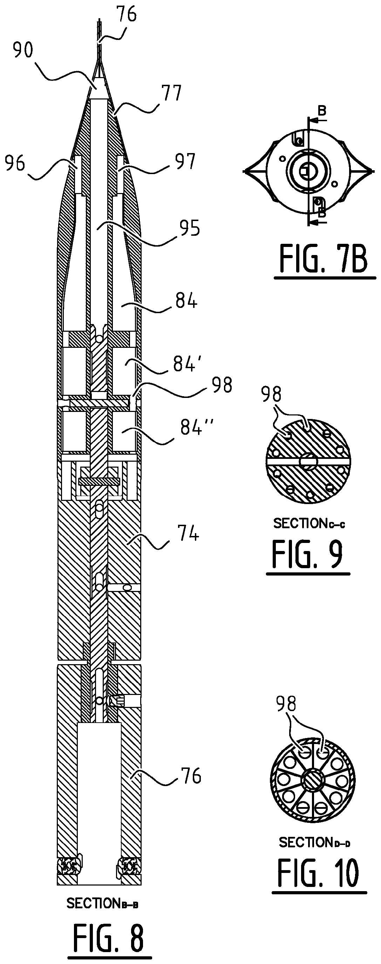

Figures 5-10 show a further embodiment of a sleeving device 70. Similar to the sleeving device 10 the present sleeving device comprises a stationary spreading element 71 arranged above a sleeving position (P, cf. figure 1). The sleeving device 70 is configured receive the supplied foil material 13, which has a flattened tubular shape, to open the flattened tubular foil material, to cut the opened tubular foil material into sleeves and to accelerate the sleeves towards containers passing on the conveyor 2. The stationary spreading element 71 of sleeving device 70 is comprised of a proximal spreading element portion 73 (in this case of downward sleeving an upper spreading element portion, in case of downward sleeving a lower spreading element portion), a distal spreading element portion 76 and an intermediate spreading element portion 74. Each of the proximal spreading element portion 73, intermediate spreading element portion 74 and distal spreading element portion 76 may comprise one or more separate modules wherein each module may perform one or more functions. For instance, the intermediate spreading element portion 74 may comprise a diaphragm portion 75, a cutter receiving portion, mounting pieces of upper guide wheels 35, intermediate guide wheels 36 and/or lower guide wheels 37, etc. The modules may be coaxially connected through a central connection hub 78.

The proximal spreading element portion 73 is shaped to open the foil 13 delivered as a flat envelop of foil material into a tubular envelope or sleeve shape. More specifically, the proximal spreading element portion 73 comprises a tip or spear 75 comprising a flat spear part 76 and a diverging spear part 77. The proximal end of the diverging spear part 77 has a substantially rectangular cross-section whereas the distal end of the diverging spear part 77 has a substantially cylindrical shape. In the diverging part 77 of the proximal spreading element portion 73 one or more slit-shaped openings 80 are provided, preferably one opening at the front side and one opening at the back side. The slit-shaped opening 80 connects to a central cavity 90 defined between two walls 91,92 extending in axial direction 47. In the walls 91,92 one or more further openings 93 may be arranged, which openings 93 are likewise in connection with the central cavity 90.

The central cavity 90 is in open connection with a central channel 95 and two side channels 95,96 (figure 5), each of the channels extending in axial direction. The central channel 95 connects to a central cavity 98 in the distal spreading element portion 76. The central cavity 98 is open at its distal side and therefore inside the central cavity 98 the ambient (exterior) air pressure prevails. Since the central cavity 90 in the proximal spreading element portion 73 is directly connected to the central cavity 98 in the distal spreading element portion 76, the slit-shaped opening(s) 80 may constitute one or more pressure-regulating openings for regulating the pressure close to the outer surface of the proximal spreading element portion when foil material is advanced along the spreading element. This pressure regulation may avoid or reduce problems such as jamming of the foil material (especially when the foil material is very thin) or a disturbed movement of the foil material along the spreading element outer surface.

Similarly, the side channels 96,97 may provide a connection with the ambient air pressure as well. As shown in figure 5, the spreading element 71 may comprise a tube formed by a tubular wall 82, wherein the interior of the tube is divided into compartments 84,84',84" using a number of partition walls 83 extending perpendicularly to the axial direction 47 of the spreading element. In the partition walls a number of channels 98 are formed so as to allow air to flow between the compartments from a region of ambient air pressure towards the cavity 90 at the proximal spreading element portion 73 and from the cavity through the pressure regulating openings 80,93 to the gap between the outer surface of the spreading element 71 and the inner surface of the foil material.

In the embodiment shown in figures 5-10 the pressure regulating openings are provided in the proximal spreading element portion. The pressure regulating opening may be absent in the other portions (i.e. the intermediate spreading element portion and the distal spreading element portion). In other embodiments pressure regulating openings are formed in the distal spreading element portion as well, for instance similar to the openings described in connection with figures 2-4. In still further embodiments the pressure regulating openings may have been provided in the proximal spreading element portion, the intermediate spreading element portion and the distal spreading element portion.

The present invention is not limited to the embodiments thereof described herein. The rights sought are defined by the following claims, within the scope of which numerous modifications can be envisaged.

## Claims

1. Container sleeving device (10) for arranging sleeves (26) on a plurality of containers (30), wherein the sleeves are made of tubular foil material made to pass over the circumferential outer surface of a spreading element (19), the container sleeving device comprising:
- a spreading element (19) configured to spread open the tubular foil material passing from a proximal spreading element portion (73) towards a distal spreading element portion (34);
- a cutting unit (25) for cutting the tubular foil material to form a sleeve;
- a sleeve discharge unit (28) configured to accelerate the sleeve to move over the outer surface of the distal spreading element portion (34) so as to discharge the sleeve towards a container;
wherein the distal spreading element portion (34) and/or the proximal spreading element portion (73) has one or more air pressure regulating openings (50) configured to regulate the air pressure close to the outer surface of the distal spreading element portion (34) and/or proximal spreading element portion (73), respectively, wherein the air pressure regulating openings (50) are connected to one or more channels (95-98) leading to a region of ambient air pressure so as to at least partially reduce the pressure difference between the pressure on the outer surface and the pressure on the inner surface of the sleeve (26) caused by Bernoulli's effect.

2. Container sleeving (10) device as claimed in claim 1, wherein the container sleeving device is configured so as to form a layer (57) of air between the inner surface of a sleeve and the outer surface of the distal spreading element portion (34) and/or proximal spreading element portion (73) when a sleeve (26) is moved along the distal spreading element portion and/or proximal spreading element portion, respectively, wherein the distal spreading element portion comprises a cylindrical wall (51) in which the air pressure regulating openings (52) are provided, the air pressure regulating opening being in open connection with one or more channels (95-97) formed by an internal volume (53) positioned in the center of the distal spreading element portion and being in open connection wit the ambient air, wherein the air pressure openings (50) and channels are configured to partly or fully equalize the pressure difference between the pressure (P_{A}) outside the layer and the pressure (P_{G}) inside the layer.

3. Container sleeving (10) device as claimed in claim 1 or 2, wherein the spreading element comprises an intermediate spreading element portion (32) between the proximal and distal spreading element portions and wherein one or more further air pressure regulating openings are arranged in the intermediate spreading element portion.

4. Container sleeving device (10) as claimed in any of the preceding claims, the distal spreading element portion (34) comprising a cavity (53) connected to the air pressure regulating openings and to a region of ambient air pressure, wherein the cavity (53) preferably comprises one or more channels in open connection with the ambient air outside the container sleeving device and with the air pressure regulating openings in the distal spreading element portion and/or proximal spreading element portion.

5. Container sleeving device (10) as claimed in any of the preceding claims, wherein the air pressure regulating openings are radial openings (50).

6. Container sleeving device (10) as claimed in any of the preceding claims, wherein the proximal spreading element portion (34) comprises a substantially diverging part (77), wherein at least one of the air pressure regulating openings is arranged in the substantially diverging part, preferably comprising a plurality of air pressure regulating openings (50) along the circumference of the diverging part, wherein the air pressure regulating openings are preferably essentially evenly distributed over the circumference of the diverging part.

7. Container sleeving device (10 as claimed in any of the preceding claims, wherein the distal spreading element portion (34) comprises a cylindrical wall (51) and wherein the air pressure regulating openings are through-holes, wherein preferably also the intermediate spreading element portion (32) between the proximal and distal spreading element portions (34,73) comprises air pressure regulating openings.

8. Container sleeving device (10) as claimed in any of the preceding claims, wherein the number of air pressure regulating openings is larger than 20.

9. Container sleeving device (10) as claimed in any of the preceding claims, wherein the air pressure openings (50) are substantially uniformly distributed along the circumferential outer surface of the distal spreading element portion.

10. Container sleeving device (10) as claimed in any of the preceding claims, wherein the sleeve discharge unit (28) comprising a set of inner discharge wheels (41) arranged at a discharge position in the wall of the distal spreading element portion and a set of outer discharge wheels (42) mounted to a frame, wherein the inner and outer discharge wheels are arranged to engage a sleeve on the discharge position and shoot the sleeve towards a container so as to arrange the sleeve on the container.

11. Container sleeving device (10) as claimed in any of the preceding claims, wherein the distal spreading element portion comprises a cylindrical wall (51) along which the sleeve can be advanced, wherein the air pressure regulating openings in the cylindrical wall are configured to equalize the pressure outside and inside the spreading element (19).

12. Container sleeving system (1) for arranging sleeves (26) on a plurality of containers (30), comprising:
- at least one container sleeving device (10) as claimed in any of the preceding claims; and
- a stationary frame (20) configured to suspend the at least one container sleeving device;
- a conveyor (20) for transporting the containers;
wherein the conveyor is preferably configured to transport the containers consecutively along a shooting position at a distance from the sleeve discharge unit (28); and/or wherein the system preferably comprises a sleeve supply (11) configured to advance a sheath of foil material to at least a spreading element (19) of the at least one container sleeving device (10).

13. Method of arranging sleeves on a plurality of containers (30), the sleeves being made of tubular foil material shaped to pass over the circumferential outer surface of a spreading element (19) of a sleeving device (10), preferably the sleeving device as claimed in any of claims 1-11, the method comprising:
- advancing the tubular foil material over an outer surface of the spreading element (19) from a proximal spreading element portion (73) in an axial direction to a distal spreading element portion (34) and thereby opening the tubular foil material;
- cutting the tubular foil material to form consecutive sleeves (26);
- successively accelerating the sleeves (26) to move over the outer surface of the distal spreading element portion (34) so as to discharge the sleeves towards the containers (30), wherein during moving the sleeves over the outer surface the sleeves are moved along a plurality of air pressure regulating openings (50) in the outer surface of the distal spreading element portion, the air pressure regulating openings being connected to one or more channels leading to a region of ambient air pressure, wherein moving the sleeve (26) over the outer surface of the distal spreading element portion (34) comprises moving the sleeve over the air pressure regulating openings (50) to at least partially reduce the pressure difference between the pressure on the outer surface and the pressure on the inner surface of the sleeve caused by Bernoulli's effect.

14. Method as claimed in claim 13, comprising, when a layer (57) of air is formed between the inner surface of a sleeve (26) and the outer surface of the distal spreading element portion (34) and/or proximal spreading element portion (73) when a sleeve is moved along the distal spreading element portion and/or proximal spreading element portion, respectively the distal spreading element portion comprising a cylindrical wall (51) in which the air pressure regulating openings (50) are provided, the air pressure regulating opening being in open connection with one or more channels (95-98) formed by an internal volume positioned in the center of the distal spreading element portion and being in open connection wit the ambient air, reducing the pressure difference so as to partly or fully equalize the pressure difference between the pressure (P_{A}) outside the layer and the pressure (P_{G}) inside the layer; and/or wherein moving the sleeve over the outer surface of the distal spreading element portion comprises moving the sleeve (26) over a plurality of openings configured to reduce said pressure difference; and/or comprising guiding ambient air into at least a channel inside the distal spreading element portion (34) and from the at least a channel through at least one air pressure regulating opening radially outwards.

15. Method as claimed in any of claims 13-14, comprising accelerating the sleeve on the distal spreading portion and shooting the sleeve towards a container so as to arrange the sleeve on the container.

## Patentansprüche

1. Behälterumhüllungsvorrichtung (10) zum Anbringen von Hülsen (26) an eine Mehrzahl an Behältern (30), wobei die Hülsen aus schlauchförmigem Folienmaterial hergestellt sind, das über die äußere Umfangsfläche eines Spreizelements (19) geführt wird, wobei die Behälterumhüllungsvorrichtung aufweist:
- ein Spreizelement (19), das so ausgebildet ist, dass es das schlauchförmige Folienmaterial, welches von einem proximalen Spreizelementabschnitt (73) zu einem distalen Spreizelementabschnitt (34) verläuft, aufspreizt;
- eine Schneideinheit (25) zum Schneiden des schlauchförmigen Folienmaterials, um eine Hülse zu bilden;
- eine Hülsenausgabeeinheit (28), die so ausgebildet ist, dass sie die Hülse beschleunigt, damit sie sich über die Außenfläche des distalen Spreizelementabschnitts (34) bewegt, um die Hülse in Richtung eines Behälters auszugeben;
wobei der distale Spreizelementabschnitt (34) und/oder der proximale Spreizelementabschnitt (73) eine oder mehrere Luftdruck-Regulierungsöffnungen (50) aufweist, die so ausgebildet sind, dass sie den Luftdruck nahe der Außenfläche des distalen Spreizelementabschnitts (34) und/oder des proximalen Spreizelementabschnitts (73) regulieren, wobei die Luftdruck-Regulierungsöffnungen (50) mit einem oder mehreren Kanälen (95-98) verbunden sind, die zu einem Bereich mit Umgebungsluftdruck führen, um die durch den Bernoulli-Effekt verursachte Druckdifferenz zwischen dem Druck auf der Außenfläche und dem Druck auf der Innenfläche der Hülse (26) zumindest teilweise zu reduzieren.

2. Behälterumhüllungsvorrichtung (10) nach Anspruch 1, wobei die Behälterumhüllungsvorrichtung so ausgebildet ist, dass sie zwischen der Innenfläche einer Hülse und der Außenfläche des distalen Spreizelementabschnitts (34) und/oder des proximalen Spreizelementabschnitts (73) eine Luftschicht (57) bildet, wenn eine Hülse (26) entlang des distalen Spreizelementabschnitts bzw. des proximalen Spreizelementabschnitts bewegt wird, wobei der distale Spreizelementabschnitt eine zylindrische Wand (51) aufweist, in der die Luftdruck-Regulierungsöffnungen (52) vorgesehen sind, die Luftdruck-Regulierungsöffnung in offener Verbindung mit einem oder mehreren Kanälen (95-97) steht, die durch ein Innenvolumen (53) gebildet werden, das in der Mitte des distalen Spreizelementabschnitts positioniert ist und in offener Verbindung mit der Umgebungsluft steht, wobei die Luftdruck-Regulierungsöffnungen (50) und Kanäle so ausgebildet sind, dass sie die Druckdifferenz zwischen dem Druck (PA) außerhalb der Schicht und dem Druck (PG) innerhalb der Schicht teilweise oder vollständig ausgleichen.

3. Behälterumhüllungsvorrichtung (10) nach Anspruch 1 oder 2, wobei das Spreizelement zwischen dem proximalen und dem distalen Spreizelementabschnitt einen Spreizelement-Zwischenabschnitt (32) aufweist, und wobei eine oder mehrere weitere Luftdruck-Regulierungsöffnungen in dem Spreizelement-Zwischenabschnitt angeordnet sind.

4. Behälterumhüllungsvorrichtung (10) nach einem der vorherigen Ansprüche, wobei der distale Spreizelementabschnitt (34) einen Hohlraum (53) aufweist, der mit den Luftdruck-Regulierungsöffnungen und mit einem Bereich des Umgebungsluftdrucks verbunden ist, wobei der Hohlraum (53) vorzugsweise einen oder mehrere Kanäle aufweist, die in offener Verbindung mit der Umgebungsluft außerhalb der Behälterumhüllungsvorrichtung und mit den Luftdruck-Regulierungsöffnungen im distalen Spreizelementabschnitt und/oder proximalen Spreizelementabschnitt stehen.

5. Behälterumhüllungsvorrichtung (10) nach einem der vorherigen Ansprüche, wobei die Luftdruck-Regulierungsöffnungen radiale Öffnungen (50) darstellen.

6. Behälterumhüllungsvorrichtung (10) nach einem der vorherigen Ansprüche, wobei der proximale Spreizelementabschnitt (34) einen im Wesentlichen divergierenden Teil (77) aufweist, wobei in dem im Wesentlichen divergierenden Teil mindestens eine der Luftdruck-Regulierungsöffnungen angeordnet ist, vorzugsweise aufweisend eine Mehrzahl an Luftdruck-Regulierungsöffnungen (50) entlang des Umfangs des divergierenden Teils, wobei die Luftdruck-Regulierungsöffnungen vorzugsweise im Wesentlichen gleichmäßig über den Umfang des divergierenden Teils verteilt sind.

7. Behälterumhüllungsvorrichtung (10) nach einem der vorherigen Ansprüche, wobei der distale Spreizelementabschnitt (34) eine zylindrische Wand (51) aufweist, und wobei die Luftdruck-Regulierungsöffnungen Durchgangslöcher darstellen, wobei vorzugsweise auch der dazwischenliegende Spreizelementabschnitt (32) zwischen dem proximalen und distalen Spreizelementabschnitt (34, 73) Luftdruck-Regulierungsöffnungen aufweist.

8. Behälterumhüllungsvorrichtung (10) nach einem der vorherigen Ansprüche, wobei die Anzahl der Luftdruck-Regulierungsöffnungen mehr als 20 beträgt.

9. Behälterumhüllungsvorrichtung (10) nach einem der vorherigen Ansprüche, wobei die Luftdruck-Regulierungsöffnungen (50) entlang der äußeren Umfangsfläche des distalen Spreizelementabschnitts im Wesentlichen gleichmäßig verteilt sind.

10. Behälterumhüllungsvorrichtung (10) nach einem der vorherigen Ansprüche, wobei die Hülsenausgabeeinheit (28) einen Satz innerer an einer Ausgabeposition in der Wand des distalen Spreizelementabschnitts angeordnete Ausgaberäder (41) sowie einen Satz äußerer an einem Rahmen angebrachte Ausgaberäder (42) aufweist, wobei die inneren und äußeren Ausgaberäder so angeordnet sind, dass sie an der Ausgabeposition mit einer Hülse in Eingriff gelangen und die Hülse in Richtung eines Behälters ausstoßen, um die Hülse an dem Behälter anzubringen.

11. Behälterumhüllungsvorrichtung (10) nach einem der vorherigen Ansprüche, wobei der distale Spreizelementabschnitt eine zylindrische Wand (51) aufweist, entlang der die Hülse vorgeschoben werden kann, wobei die Luftdruck-Regulierungsöffnungen in der zylindrischen Wand so ausgebildet sind, dass der Druck außerhalb und innerhalb des Spreizelements (19) ausgeglichen wird.

12. Behälterumhüllungssystem (1) zum Anbringen von Hülsen (26) an eine Mehrzahl an Behältern (30), aufweisend:
- mindestens eine Behälterumhüllungsvorrichtung (10) nach einem der vorherigen Ansprüche; und
- einen stationären Rahmen (20), der so ausgebildet ist, dass er die mindestens eine Behälterumhüllungsvorrichtung trägt;
- einen Förderer (20) zum Transportieren der Behälter;
wobei der Förderer vorzugsweise so ausgebildet ist, dass er die Behälter nacheinander entlang einer Aufnahmeposition in einem Abstand von der Hülsenausgabeeinheit (28) transportiert; und/oder wobei das System vorzugsweise eine Hülsenzuführung (11) aufweist, die so ausgebildet ist, dass sie eine Hülle aus Folienmaterial zu mindestens einem Spreizelement (19) der mindestens einen Behälterumhüllungsvorrichtung (10) fördert.

13. Verfahren zum Anbringen von Hülsen an eine Mehrzahl an Behältern (30), wobei die Hülsen aus schlauchförmigem Folienmaterial hergestellt sind, das so geformt ist, dass es über die äußere Umfangsfläche eines Spreizelements (19) einer Umhüllungsvorrichtung (10), vorzugsweise der Umhüllungsvorrichtung nach einem der Ansprüche 1 bis 11, geführt werden kann, wobei das Verfahren folgende Schritte aufweist:
- Vorschieben des schlauchförmigen Folienmaterials über eine Außenfläche des Spreizelements (19) von einem proximalen Spreizelementabschnitt (73) in einer axialen Richtung zu einem distalen Spreizelementabschnitt (34) und dadurch Öffnen des schlauchförmigen Folienmaterials;
- Schneiden des schlauchförmigen Folienmaterials zur Bildung aufeinanderfolgender Hülsen (26);
- sukzessives Beschleunigen der Hülsen (26), um diese über die äußere Oberfläche des distalen Spreizelementabschnitts (34) zu bewegen, so dass die Hülsen zu den Behältern (30) hin ausgegeben werden, wobei während des Bewegens der Hülsen über die äußere Oberfläche die Hülsen entlang einer Mehrzahl an Luftdruck-Regulierungsöffnungen (50) an der äußeren Oberfläche des distalen Spreizelementabschnitts bewegt werden, wobei die Luftdruck-Regulierungsöffnungen mit einem oder mehreren zu einem Bereich mit Umgebungsluftdruck führenden Kanälen verbunden sind, wobei das Bewegen der Hülse (26) über die äußere Oberfläche des distalen Spreizelementabschnitts (34) das Bewegen der Hülse über die Luftdruck-Regulierungsöffnungen (50) umfasst, um die durch den Bernoulli-Effekt verursachte Druckdifferenz zwischen dem Druck auf der äußeren Oberfläche und dem Druck auf der inneren Oberfläche der Hülse zumindest teilweise zu reduzieren.

14. Verfahren nach Anspruch 13, wobei, wenn beim Bewegen einer Hülse entlang des distalen Spreizelementabschnitts und/oder des proximalen Spreizelementabschnitts eine Luftschicht (57) zwischen der Innenfläche einer Hülse (26) und der Außenfläche des distalen Spreizelementabschnitts (34) und/oder des proximalen Spreizelementabschnitts (73) gebildet wird, beziehungsweise der distale Spreizelementabschnitt eine zylindrische Wand (51) aufweist, in der die Luftdruck-Regulierungsöffnungen (50) vorgesehen sind, die Luftdruck-Regulierungsöffhung in offener Verbindung mit einem oder mehreren Kanälen (95-98) steht, die durch ein Innenvolumen gebildet werden, welches in der Mitte des distalen Spreizelementabschnitts positioniert ist und in offener Verbindung mit der Umgebungsluft steht, wobei die Druckdifferenz reduziert wird, um die Druckdifferenz zwischen dem Druck (PA) außerhalb der Schicht und dem Druck (PG) innerhalb der Schicht teilweise oder vollständig auszugleichen; und/oder wobei das Bewegen der Hülse über die äußere Oberfläche des distalen Spreizelementabschnitts das Bewegen der Hülse (26) über eine Mehrzahl an Öffnungen umfasst, die ausgebildet sind, um die Druckdifferenz zu reduzieren; und/oder aufweisend das Leiten von Umgebungsluft in mindestens einen Kanal innerhalb des distalen Spreizelementabschnitts (34) und von dem mindestens einen Kanal durch mindestens eine Luftdruck-Regulierungsöffhung radial nach außen.

15. Verfahren nach einem der Ansprüche 13 bis 14, bei dem die Hülse auf dem distalen Spreizabschnitt beschleunigt und in Richtung eines Behälters ausgestoßen wird, um die Hülse an dem Behälter anzubringen.

## Revendications

1. Dispositif de pose de manchon de contenant (10) pour l'agencement de manchons (26) sur une pluralité de contenants (30), dans lequel les manchons sont constitués de matériau en feuille tubulaire amené à passer au-dessus de la surface externe circonférentielle d'un élément d'écartement (19), le dispositif de pose de manchon de contenant comprenant :
- un élément d'écartement (19) configuré pour ouvrir par écartement le matériau en feuille tubulaire passant d'une partie proximale d'élément d'écartement (73) à une partie distale d'élément d'écartement (34) ;
- une unité de découpe (25) pour la découpe du matériau en feuille tubulaire pour former un manchon ;
- une unité de refoulement de manchon (28) configurée pour accélérer le manchon en déplacement au-dessus de la surface externe de la partie distale d'élément d'écartement (34) de façon à refouler le manchon vers un contenant ;
dans lequel la partie distale d'élément d'écartement (34) et/ou la partie proximale d'élément d'écartement (73) possède une ou plusieurs ouvertures de régulation de pression d'air (50) configurées pour réguler la pression près de la surface externe de la partie distale d'élément d'écartement (34) et/ou de la partie proximale d'élément d'écartement (73), respectivement, dans lequel les ouvertures de régulation de pression d'air (50) sont raccordées à un ou plusieurs canaux (95 à 98) menant à une région de pression d'air ambiant de façon à au moins partiellement réduire la différence de pression entre la pression sur la surface externe et la pression sur la surface interne du manchon (26) provoquée par l'effet de Bernoulli.

2. Dispositif de pose de manchon de contenant (10) selon la revendication 1, dans lequel le dispositif de pose de manchon de contenant est configuré de façon à former une couche (57) d'air entre la surface interne d'un manchon et la surface externe de la partie distale d'élément d'écartement (34) et/ou de la partie proximale d'élément d'écartement (73) lorsqu'un manchon (26) est déplacé le long de la partie distale d'élément d'écartement et/ou de la partie proximale d'élément d'écartement, respectivement, dans lequel la partie distale d'élément d'écartement comprend une paroi cylindrique (51) dans laquelle les ouvertures de régulation de pression d'air (52) sont prévues, l'ouverture de régulation de pression d'air étant en raccordement ouvert avec un ou plusieurs canaux (95 à 97) formés par un volume interne (53) positionné au centre de la partie distale d'élément d'écartement et étant en raccordement ouvert avec l'air ambiant, dans lequel les ouvertures de pression d'air (50) et les canaux sont configurés pour égaliser partiellement ou totalement la différence de pression entre la pression (P_{A}) à l'extérieur de la couche et la pression (P_{G}) à l'intérieur de la couche.

3. Dispositif de pose de manchon de contenant (10) selon la revendication 1 ou 2, dans lequel l'élément d'écartement comprend une partie intermédiaire d'élément d'écartement (32) entre les parties proximale et distale d'élément d'écartement et dans lequel une ou plusieurs ouvertures de régulation de pression d'air supplémentaires sont agencées dans la partie intermédiaire d'élément d'écartement.

4. Dispositif de pose de manchon de contenant (10) selon l'une quelconque des revendications précédentes, la partie distale d'élément d'écartement (34) comprenant une cavité (53) raccordée aux ouvertures de régulation de pression d'air et à une région de pression d'air ambiant, dans lequel la cavité (53) comprend de préférence un ou plusieurs canaux en raccordement ouvert avec l'air ambiant à l'extérieur du dispositif de pose de manchon de contenant et avec les ouvertures de régulation de pression d'air dans la partie distale d'élément d'écartement et/ou la partie proximale d'élément d'écartement.

5. Dispositif de pose de manchon de contenant (10) selon l'une quelconque des revendications précédentes, dans lequel les ouvertures de régulation de pression d'air sont des ouvertures radiales (50).

6. Dispositif de pose de manchon de contenant (10) selon l'une quelconque des revendications précédentes, dans lequel la partie proximale d'élément d'écartement (34) comprend une partie sensiblement divergente (77), dans lequel au moins l'une des ouvertures de régulation de pression d'air est agencée dans la partie sensiblement divergente, comprenant de préférence une pluralité d'ouvertures de régulation de pression d'air (50) le long de la circonférence de la partie divergente, dans lequel les ouvertures de régulation de pression d'air sont de préférence essentiellement réparties uniformément sur la circonférence de la partie divergente.

7. Dispositif de pose de manchon de contenant (10) selon l'une quelconque des revendications précédentes, dans lequel la partie distale d'élément d'écartement (34) comprend une paroi cylindrique (51) et dans lequel les ouvertures de régulation de pression d'air sont des trous traversants, dans lequel de préférence également la partie intermédiaire d'élément d'écartement (32) entre les parties proximale et distale d'élément d'écartement (34, 73) comprend des ouvertures de régulation de pression d'air.

8. Dispositif de pose de manchon de contenant (10) selon l'une quelconque des revendications précédentes, dans lequel le nombre d'ouvertures de régulation de pression d'air est supérieur à 20.

9. Dispositif de pose de manchon de contenant (10) selon l'une quelconque des revendications précédentes, dans lequel les ouvertures de pression d'air (50) sont sensiblement réparties uniformément le long de la surface externe circonférentielle de la partie distale d'élément d'écartement.

10. Dispositif de pose de manchon de contenant (10) selon l'une quelconque des revendications précédentes, dans lequel l'unité de refoulement de manchon (28) comprenant un ensemble de roues de refoulement internes (41) agencées à une position de refoulement dans la paroi de la partie distale d'élément d'écartement et un ensemble de roues de refoulement externes (42) montées sur un cadre, dans lequel les roues de refoulement internes et externes sont agencées pour venir en prises avec un manchon sur la position de décharge et expulser le manchon vers un contenant de façon à agencer le manchon sur le contenant.

11. Dispositif de pose de manchon de contenant (10) selon l'une quelconque des revendications précédentes, dans lequel la partie distale d'élément d'écartement comprend une paroi cylindrique (51) le long de laquelle le manchon peut être avancé, dans lequel les ouvertures de régulation de pression d'air dans la paroi cylindrique sont configurées pour égaliser la pression à l'extérieur et à l'intérieur de l'élément d'écartement (19).

12. Système de pose de manchon de contenant (1) pour l'agencement de manchons (26) sur une pluralité de contenants (30), comprenant :
- au moins un dispositif de pose de manchon de contenant (10) selon l'une quelconque des revendications précédentes ; et
- un cadre fixe (20) configuré pour suspendre l'au moins un dispositif de pose de manchon de contenant ;
- un convoyeur (20) pour le transport des contenants ;
dans lequel le convoyeur est de préférence configuré pour transporter les contenants consécutivement le long d'une position d'expulsion à une certaine distance de l'unité de refoulement de manchon (28) ; et/ou dans lequel le système comprend de préférence un dispositif d'apport de manchon (11) configuré pour faire avancer une gaine de matériau en feuille jusqu'à au moins un élément d'écartement (19) de l'au moins un dispositif de pose de manchon de contenant (10).

13. Procédé d'agencement de manchons sur une pluralité de contenants (30), les manchons étant constitués de matériau en feuille tubulaire façonné pour passer au-dessus de la surface externe circonférentielle d'un élément d'écartement (19) d'un dispositif de pose de manchon (10), de préférence le dispositif de pose de manchon selon l'une quelconque des revendications 1 à 11, le procédé comprenant :
- l'avancement du matériau en feuille tubulaire au-dessus d'une surface externe de l'élément d'écartement (19), d'une partie proximale d'élément d'écartement (73) dans une direction axiale à une partie distale d'élément d'écartement (34), et ainsi l'ouverture du matériau en feuille tubulaire ;
- la découpe du matériau en feuille tubulaire pour former des manchons consécutifs (26) ;
- l'accélération, de manière successive, des manchons (26) en déplacement au-dessus de la surface externe de la partie distale d'élément d'écartement (34) de façon à refouler les manchons vers les contenants (30), dans lequel pendant le déplacement des manchons au-dessus de la surface externe, les manchons sont déplacés le long d'une pluralité d'ouvertures de régulation de pression d'air (50) dans la surface externe de la partie distale d'élément d'écartement, les ouvertures de régulation de pression d'air étant raccordées à un ou plusieurs canaux menant à une région de pression d'air ambiant, dans lequel le déplacement du manchon (26) au-dessus de la surface externe de la partie distale d'élément d'écartement (34) comprend le déplacement du manchon au-dessus des ouvertures de régulation de pression d'air (50) pour au moins partiellement réduire la différence de pression entre la pression sur la surface externe et la pression sur la surface interne du manchon provoquée par l'effet de Bernoulli.

14. Procédé selon la revendication 13, comprenant, lorsqu'une couche (57) d'air est formée entre la surface interne d'un manchon (26) et la surface externe de la partie distale d'élément d'écartement (34) et/ou de la partie proximale d'élément d'écartement (73) lorsqu'un manchon est déplacé le long de la partie distale d'élément d'écartement et/ou de la partie proximale d'élément d'écartement, respectivement, la partie distale d'élément d'écartement comprenant une paroi cylindrique (51) dans laquelle les ouvertures de régulation de pression d'air (50) sont prévues, l'ouverture de régulation de pression d'air étant en raccordement ouvert avec un ou plusieurs canaux (95 à 98) formés par un volume interne positionné au centre de la partie distale d'élément d'écartement et étant en raccordement ouvert avec l'air ambiant, la réduction de la différence de pression de façon à égaliser partiellement ou totalement la différence de pression entre la pression (P_{A}) à l'extérieur de la couche et la pression (P_{G}) à l'intérieur de la couche ; et/ou dans lequel le déplacement du manchon au-dessus de la surface externe de la partie distale d'élément d'écartement comprend le déplacement du manchon (26) au-dessus d'une pluralité d'ouvertures configurées pour réduire ladite différence de pression ; et/ou comprenant le guidage d'air ambiant dans au moins un canal à l'intérieur de la partie distale d'élément d'écartement (34) et à partir de l'au moins un canal à travers au moins une ouverture de régulation de pression d'air radialement vers l'extérieur.

15. Procédé selon l'une quelconque des revendications 13 à 14, comprenant l'accélération du manchon sur la partie distale d'écartement et l'expulsion du manchon vers un contenant de façon à agencer le manchon sur le contenant.
